# EUROPÄISCHE PATENTSCHRIFT

(11) **EP 4 074 946 B1**
(45) Veröffentlichungstag und Bekanntmachung des Hinweises auf die Patenterteilung: **03.01.2024**
(21) Anmeldenummer: 22157094.8
(22) Anmeldetag: 16.02.2022
(51) Int. Cl.: F01N 3/20, F01N 13/00, F01N 9/00, F02M 26/06, F02M 26/05

(54) **VERFAHREN ZUR ABGASNACHBEHANDLUNG EINES DIESELMOTORS UND DIESELMOTOR**
WASTE GAS TREATMENT METHOD FOR A DIESEL ENGINE AND DIESEL ENGINE
PROCÉDÉ DE POST-TRAITEMENT DES GAZ D'ÉCHAPPEMENT D'UN MOTEUR DIESEL ET MOTEUR DIESEL

(30) Priorität: 14.04.2021 DE 102021203710
(43) Veröffentlichungstag der Anmeldung: 19.10.2022
(73) Patentinhaber: VOLKSWAGEN AG, 38440 Wolfsburg (DE)
(72) Erfinder: Groenendijk, Axel, 38518 Gifhorn (DE); Kellner, Stephan, 38440 Wolfsburg (DE); Westendorf, Johannes, 38104 Braunschweig (DE)

(56) Entgegenhaltungen:
- EP-A1- 2 511 492
- DE-A1-102018 102 490
- US-A1- 2013 145 831
- US-A1- 2019 211 728

## Beschreibung

Die Erfindung betrifft ein Verfahren zur Abgasnachbehandlung eines Dieselmotors sowie einen Dieselmotor mit einem Abgasnachbehandlungssystem zur Durchführung eines solchen Verfahrens gemäß dem Oberbegriff der unabhängigen Patentansprüche.

Die aktuelle und eine zukünftig immer schärfer werdende Abgasgesetzgebung stellt hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxidemissionen Herausforderungen für die Motorenentwickler dar. Bei Ottomotoren erfolgt die Abgasreinigung in bekannter Weise über einen Drei-Wege-Katalysator sowie dem Drei-Wege-Katalysator vor-und nachgeschaltete weitere Katalysatoren. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Um die hohen Anforderungen an minimale Stickoxidemissionen zu erfüllen, sind Abgasnachbehandlungssysteme bekannt, welche zwei in Reihe geschaltete SCR-Katalysatoren aufweisen, wobei jedem der SCR-Katalysatoren ein Dosierelement zur Eindosierung eines Reduktionsmittels vorgeschaltet ist. Als Reduktionsmittel wird dabei bevorzugt eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wodurch Ammoniak im Abgaskanal freigesetzt wird. Eine handelsübliche, wässrige Harnstofflösung setzt sich im Allgemeinen aus 32,5 % Harnstoff und 67,5 % Wasser zusammen.

Um die Rohemissionen eines Verbrennungsmotors zu verringern, sind Abgasrückführungssysteme bekannt, bei welchen der Abgasstrom des Verbrennungsmotors, gegebenenfalls unter zusätzlicher Kühlung des Abgasstroms, zurückgeführt wird. Prinzipiell lässt sich dabei zwischen einer motornahen Hochdruckabgasrückführung und einer stromabwärts einer Turbine eines Abgasturboladers aus dem Abgaskanal abzweigenden Niederdruckabgasrückführung unterscheiden. Dabei wird das Abgas aus der Abgasanlage dem Ansaugtrakt des Verbrennungsmotors stromaufwärts eines Verdichters des Abgasturboladers zugeführt, um die NOx-Rohemissionen des Verbrennungsmotors zu verringern. Für die Freigabe der Niederdruckabgasrückführung muss eine bestimmte Temperaturschwelle überschritten werden, um eine Kondensatbildung am Abgasrückführungskühler beziehungsweise im Ansaugtrakt zu vermeiden. Bis zu der Freigabe der gekühlten Niederdruckabgasrückführung steht nur die in Bezug auf die Minderung der NOx-Rohemissionen weniger effiziente Hochdruckabgasrückführung zur Verfügung.

Um die Effizienz des Abgasnachbehandlungssystems zur Reduzierung von Stickoxiden zu erhöhen sind Abgasnachbehandlungssysteme mit zwei in Reihe geschalteten SCR-Katalysatoren bekannt, wobei der erste SCR-Katalysator stromabwärts einer Turbine eines Abgasturboladers und stromaufwärts einer Verzweigung, an der die Niederdruck-Abgasrückführung aus dem Abgaskanal abzweigt, angeordnet ist. Der zweite SCR-Katalysator ist stromabwärts dieser Verzweigung angeordnet, um bei hohen Abgastemperaturen eine möglichst lange Abgaslauflänge und ein Abkühlen des Abgasstroms zu ermöglichen und somit auch bei hohen Motorleistungen eine effiziente Abgasnachbehandlung des Abgasstroms des Verbrennungsmotors zu ermöglichen.

Aus der DE 10 2019 105 748 A1 ist ein Verfahren zur Abgasnachbehandlung eines Verbrennungsmotors bekannt, welcher mit seinem Auslass mit einer Abgasanlage verbunden ist. Dabei sind in der Abgasanlage stromabwärts einer Turbine eines Abgasturboladers ein motornaher SCR-Katalysator, insbesondere ein Partikelfilter mit einer Beschichtung zur selektiven katalytischen Reduktion von Stickoxiden und stromabwärts des ersten SCR-Katalysators ein zweiter SCR-Katalysator angeordnet. Stromabwärts des ersten SCR-Katalysators und stromaufwärts des zweiten SCR-Katalysators ist ein Abgassensor zur Erfassung einer Ammoniakkonzentration im Abgaskanal angeordnet. Das Abgasnachbehandlungssystem umfasst ferner ein erstes Dosierelement mit welchem ein Reduktionsmittel stromaufwärts des ersten SCR-Katalysators in den Abgaskanal eindosierbar ist sowie ein zweites Dosierelement, mit welchem ein Reduktionsmittel stromabwärts des ersten SCR-Katalysators und stromaufwärts des zweiten SCR-Katalysators in den Abgaskanal eindosierbar ist. Dabei wird das Reduktionsmittel durch das erste Dosierelement in den Abgaskanal eindosiert und stromabwärts des ersten SCR-Katalysators eine Ammoniakkonzentration im Abgaskanal gemessen. Anhand der gemessenen Ammoniakkonzentration wird die Ammoniakbeladung des zweiten SCR-Katalysators und die Eindosierung des Reduktionsmittels durch das zweite Dosierelement geregelt.

Die DE 10 2017 200 089 B3 beschreibt ein Verfahren zum Betrieb eines Kraftfahrzeugs mit einer ersten SCR-Abgasnachbehandlungseinrichtung stromaufwärts einer Abzweigung zu einer Niederdruck-Abgasrückführung. Das Kraftfahrzeug weist einen hybridelektrischen Antrieb auf, und stromabwärts der Abzweigung zu der Niederdruck-Abgasrückführung ist eine zweite SCR-Abgasnachbehandlungseinrichtung im Abgastrakt angeordnet. Ammoniak für die SCR-Abgasnachbehandlung wird stromaufwärts der Abzweigung zu der Niederdruck-Abgasrückführung zugeführt oder erzeugt. Im Fahrbetrieb wird laufend zumindest die aktuelle Ammoniak-Beladung der ersten SCR-Abgasnachbehandlungseinrichtung ermittelt und außerdem geprüft, ob die aktuelle Vortriebsanforderung für das Fahrzeug einer Kombination von Temperatur und Volumenstrom im Abgastrakt entspricht, die erwartungsgemäß zu Ammoniak-Desorption in der ersten SCR-Abgasnachbehandlungseinrichtung führt. Solange dies der Fall ist, wird die aktuelle Kombination von Drehmoment und Drehzahl des Verbrennungsmotors unter Nutzung des hybridelektrischen Antriebs zur Aufrechterhaltung der aktuellen Vortriebsanforderung so verändert, dass entweder die Betriebsbedingungen der ersten SCR-Abgasnachbehandlungseinrichtung unter den Desorptions-Grenzen bleiben oder die erste SCR-Abgasnachbehandlungseinrichtung beschleunigt Ammoniak desorbiert, wobei währenddessen von Niederdruck-Abgasrückführung auf Hochdruck-Abgasrückführung umgeschaltet wird.

Aus der US 9 458 799 B2 ist ein Verfahren zum Betreiben einer Kraftfahrzeug-Brennkraftmaschine mit einem eine katalytisch und/oder filtertechnisch wirksame Abgasreinigungseinheit aufweisenden Abgastrakt bekannt, bei dem Brennräumen der Brennkraftmaschine um eine Gesamtabgasrückführrate von aus dem Abgastrakt abgezweigtem Abgas ergänzte Verbrennungsluft zugeführt wird. Dabei weist die Gesamtabgasrückführrate einen stromab von der Abgasreinigungseinheit abgezweigten Niederdruckanteil und einen stromauf von einer im Abgastrakt angeordneten Abgasturboladerturbine abgezweigten Hochdruckanteil auf. Es ist vorgesehen, dass bei zumindest annähernd gleichen Betriebspunkten der Brennkraftmaschine mit zunehmender Betriebszeit der Abgasreinigungseinheit ein im Wesentlichen abnehmender Niederdruckanteil eingestellt wird.

Die US 8 833 059 B2 beschreibt einen Verbrennungsmotor mit einem Luftzufuhrsystem zur Zufuhr von Verbrennungsluft zum Verbrennungsmotor und einem Abgase des Verbrennungsmotors aufnehmenden Abgastrakt, in welchem ein Partikelfilter und eine zur selektiven katalytischen Stickoxidreduktion mittels Ammoniak befähigten SCR-Abgasreinigungskomponente angeordnet sind. Über eine Zugabevorrichtung kann Ammoniak oder ein zur Abspaltung von Ammoniak befähigtes Reduktionsmittel in den Abgastrakt stromauf der SCR-Abgasreinigungskomponente gegeben werden. Für den Verbrennungsmotor ist ein Abgasturbolader vorgesehen, dessen Turbine stromauf vom Partikelfilter im Abgastrakt angeordnet ist. Zur Rückführung von Abgas aus dem Abgastrakt in das Luftzufuhrsystem sind eine stromauf der Turbine des Abgasturboladers vom Abgastrakt abzweigende erste Abgasrückführleitung und eine stromab vom Partikelfilter vom Abgastrakt abzweigende zweite Abgasrückführleitung vorgesehen.

Die DE 10 2018 102 490 A1 offenbart eine Vorrichtung zur Abgasnachbehandlung eines Verbrennungsmotors, wobei in einer Abgasanlage des Verbrennungsmotors ein erster, motornaher SCR-Katalysator und ein zweiter, motorferner SCR-Katalysator angeordnet sind und wobei jedem der SCR-Katalysatoren ein Dosiermodul zugeordnet ist, mit dem ein Reduktionsmittel zur selektiven, katalytischen Reduktion von Stickoxiden, insbesondere wässrige Harnstofflösung, in die Abgasanlage jeweils stromaufwärts des jeweiligen SCR-Katalysators eindosiert werden kann. Dabei erfolgt die Eindosierung jeweils durch das Dosiermodul, dessen zugeordneter SCR-Katalysator die günstigsten Bedingungen für eine möglichst effiziente Konvertierung von Stickoxiden aufweist.

Nachteilig bei den aus dem Stand der Technik bekannten Lösungen ist es, dass es bei hochlastigen Betriebszuständen des Dieselmotors zu einer thermischen Desorption des im SCR-Katalysator eingespeicherten Ammoniaks kommen kann. Das dabei freigesetzte Ammoniak und dessen Reaktionsprodukte können in die Niederdruckabgasrückführung gelangen und sich dort ablagern, was zu Funktionsstörungen bis hin zum Ausfall der Niederdruckabgasrückführung führen kann.

Der Erfindung liegt nun die Aufgabe zugrunde, bei einem Dieselmotor mit einem Abgasnachbehandlungssystem mit zwei in Reihe geschalteten SCR-Katalysatoren die Effizienz bezüglich der NOx-Konvertierung weiter zu verbessern und insbesondere die Gefahr von Ablagerungen in der Abgasanlage zu verringern.

Erfindungsgemäß wird diese Aufgabe durch ein Verfahren zur Abgasnachbehandlung eines Dieselmotors, der mit seinem Auslass mit einer Abgasanlage verbunden ist, gelöst. In der Abgasanlage sind stromabwärts einer Turbine eines Abgasturboladers ein motornaher erster SCR-Katalysator und stromabwärts des motornahen ersten SCR-Katalysators ein zweiter SCR-Katalysator angeordnet. Die Abgasanlage umfasst ein erstes Dosierelement, mit welchem ein Reduktionsmittel stromaufwärts des ersten SCR-Katalysators in den Abgaskanal eindosierbar ist und ein zweites Dosierelement, mit welchem ein Reduktionsmittel stromabwärts des ersten SCR-Katalysators eindosierbar ist. Der Dieselmotor weist eine Hochdruckabgasrückführung, welche die Abgasanlage stromaufwärts der Turbine des Abgasturboladers mit einem Ansaugtrakt stromabwärts eines Verdichters des Abgasturboladers verbindet und eine Niederdruckabgasrückführung auf, welche stromabwärts des ersten SCR-Katalysators und stromaufwärts des zweiten Dosierelements aus einem Abgaskanal der Abgasanlage abzweigt. Der Dieselmotor beziehungsweise das Abgasnachbehandlungssystem des Dieselmotors weist ferner Mittel zur Bestimmung einer Motorlast des Dieselmotors, eines Abgasmassenstroms, einer Abgastemperatur und einer Schadstoffkonzentration in der Abgasanlage auf. Das erfindungsgemäße Verfahren umfasst folgende Schritte:
- Ermitteln eines Lastzustands des Dieselmotors und/oder einer Abgastemperatur des Dieselmotors,
- Vergleichen der Abgastemperatur mit einer ersten Schwellentemperatur und/oder der Motorlast mit einer Schwellenlast, wobei
- bei einer Abgastemperatur unterhalb der ersten Schwellentemperatur oder einer Motorlast unterhalb der Schwellenlast eine Eindosierung des Reduktionsmittels ausschließlich durch das erste Dosierelement erfolgt und eine Abgasrückführung über die Hochdruckabgasrückführung erfolgt, und wobei
- bei einer Abgastemperatur oberhalb der ersten Schwellentemperatur oder einer Motorlast oberhalb der Schwellenlast eine Eindosierung des Reduktionsmittels ausschließlich durch das zweite Dosierelement erfolgt und eine Abgasrückführung sowohl über die Hochdruckabgasrückführung als auch über die Niederdruckabgasrückführung erfolgt.

Das erfindungsgemäße Verfahren ermöglicht zwei verschiedene Betriebsarten, bei denen in beiden Betriebsarten eine effiziente Konvertierung von Stickoxidemissionen sichergestellt wird und gleichzeitig betriebssicher Ablagerungen in der Abgasanlage, insbesondere in der Niederdruckabgasrückführung verhindert werden. Dadurch kann sichergestellt werden, dass das Abgasnachbehandlungssystem auch nach erhöhter Betriebsdauer eine effiziente Konvertierung von Stickoxiden ermöglicht.

Durch die in den abhängigen Ansprüchen aufgeführten zusätzlichen Merkmale sind vorteilhafte Verbesserungen und Weiterentwicklungen des im unabhängigen Anspruch beschriebenen Verfahren möglich.

In bevorzugter Ausgestaltung der Erfindung ist vorgesehen, dass bei einer Abgastemperatur oberhalb der ersten Schwellentemperatur oder einer Motorlast oberhalb der Schwellenlast mehr als 50% des zurückgeführten Gesamtabgasstroms über die Niederdruckabgasrückführung zurückgeführt wird. Durch eine Abgasrückführung über die Niederdruckabgasrückführung wird vergleichsweise kaltes Abgas in die Brennräume des Dieselmotors zurückgeführt, wodurch die Rohemissionen des Dieselmotors verringert werden können. Dies ermöglicht einen geringeren Aufwand bei der Abgasnachbehandlung und somit einen geringeren Einsatz von Reduktionsmittel, wodurch die Gefahr von Ablagerungen weiter reduziert wird.

In weiterer bevorzugter Ausgestaltung der Erfindung ist vorgesehen, dass der über die Niederdruckabgasrückführung zurückgeführte Abgasstrom durch einen Abgasrückführungskühler abgekühlt wird. Durch eine zusätzliche Kühlung des über die Niederdruckabgasrückführung zurückgeführten Abgasstroms können die Rohemissionen des Dieselmotors besonders effizient abgesenkt werden.

In einer vorteilhaften Ausgestaltung des Verfahrens ist vorgesehen, dass ein Abgasstrom des Dieselmotors durch ein außermotorisches Heizmittel vor dem Eintritt in den ersten SCR-Katalysator beheizt wird. Außermotorische Heizmittel können insbesondere elektrische Heizelemente oder Abgasbrenner sein, mit welchen der Abgasstrom im Wesentlichen unabhängig vom Betriebszustand des Dieselmotors erhitzt werden kann. Durch ein Beheizen des Abgasstroms können die Abgasnachbehandlungskomponenten nach einem Kaltstart des Dieselmotors schneller auf ihre jeweilige Betriebstemperatur aufgeheizt werden, sodass die Konvertierung von Schadstoffen, insbesondere von Stickoxiden, in der Kaltstartphase verbessert wird.

Besonders bevorzugt ist dabei, wenn der Abgasstrom des Verbrennungsmotors durch das außermotorische Heizmittel beheizt wird, wenn die Abgastemperatur unterhalb eines zweiten Schwellenwertes liegt oder die Temperatur einer Abgasnachbehandlungskomponente unterhalb einer Light-Off-Temperatur der jeweiligen Abgasnachbehandlungskomponente liegt.

Erfindungsgemäß ist vorgesehen, dass bei niedrigen Motorlasten und/oder niedrigen Abgastemperaturen eine ungekühlte Abgasrückführung des über die Hochdruckabgasrückführung zurückgeführten Abgasstroms und bei hohen Motorlasten eine gekühlte Abgasrückführung des über die Hochdruckabgasrückführung zurückgeführten Abgasstroms erfolgt. Dadurch ist eine besonders effiziente Verringerung der Rohemissionen des Dieselmotors möglich.

Erfindungsgemäß ist vorgesehen, dass ein Abgasrückführungsventil der Niederdruckabgasrückführung geschlossen wird, wenn eine Eindosierung von Reduktionsmittel durch das erste Dosierelement erfolgt und stromabwärts des ersten SCR-Katalysators ein Anstieg einer Ammoniakkonzentration im Abgasstrom des Dieselmotors detektiert wird. Durch ein Schließen des Abgasrückführungsventils kann ein Abgasstrom durch die Niederdruckabgasrückführung verhindert werden. Somit wird sichergestellt, dass es zu keiner Versottung und/oder zu Ablagerungen von Reduktionsmittel oder Reaktionsprodukten des Reduktionsmittels in der Niederdruckabgasrückführung kommt.

Ein weiterer Teilaspekt betrifft einen Dieselmotor mit einem Ansaugtrakt und einer Abgasanlage, wobei der Dieselmotor mit seinem Auslass mit einer Abgasanlage verbunden ist. In der Abgasanlage sind stromabwärts einer Turbine eines Abgasturboladers ein motornaher erster SCR-Katalysator und stromabwärts des motornahen ersten SCR-Katalysators ein zweiter SCR-Katalysator angeordnet. Die Abgasanlage umfasst ein erstes Dosierelement, mit welchem ein Reduktionsmittel stromaufwärts des ersten SCR-Katalysators in den Abgaskanal eindosierbar ist und ein zweites Dosierelement, mit welchem ein Reduktionsmittel stromabwärts des ersten SCR-Katalysators eindosierbar ist. Der Dieselmotor weist eine Hochdruckabgasrückführung, welche die Abgasanlage stromaufwärts der Turbine des Abgasturboladers mit einem Ansaugtrakt stromabwärts eines Verdichters des Abgasturboladers verbindet und eine Niederdruckabgasrückführung auf, welche stromabwärts des ersten SCR-Katalysators und stromaufwärts des zweiten Dosierelements aus einem Abgaskanal der Abgasanlage abzweigt. Der Dieselmotor beziehungsweise das Abgasnachbehandlungssystem des Dieselmotors weist ferner Mittel zur Bestimmung einer Motorlast des Dieselmotors, eines Abgasmassenstroms, einer Abgastemperatur und einer Schadstoffkonzentration in der Abgasanlage auf. Der Dieselmotor umfasst ferner ein Motorsteuergerät mit einer Recheneinheit und einer Speichereinheit, welches dazu eingerichtet ist, ein solches Verfahren zur Abgasnachbehandlung eines Dieselmotors auszuführen, wenn ein in der Speichereinheit abgelegter Programmcode durch die Recheneinheit des Motorsteuergeräts ausgeführt wird.

Durch einen solchen Dieselmotor können die aus dem Stand der Technik bekannten Nachteile bezüglich ansteigender Stickoxidemissionen bei hohen Abgastemperaturen und Ablagerungen in der Abgasanlage, insbesondere in der Niederdruckabgasrückführung, betriebssicher verhindert werden.

In einer vorteilhaften Ausgestaltung des Dieselmotors ist vorgesehen, dass in der Abgasanlage ein Abgassensor angeordnet ist, wobei der Abgassensor als NH3-Sensor oder als NH3-NOx-Kombisensor ausgeführt ist. Durch einen NH3-Sensor oder einen NH3-NOx-Kombisensor kann auf einfache Art und Weise ein Ammoniakdurchbruch durch den ersten SCR-Katalysator detektiert werden, wobei mit einem solchen Ammoniakdurchbruch die Gefahr von Ablagerungen in der Abgasanlage steigt.

Erfindungsgemäß ist vorgesehen, dass die Hochdruckabgasrückführung einen schaltbaren Abgasrückführungskühler mit einem Bypass aufweist, wobei ein über die Hochdruckabgasrückführung des Dieselmotors zurückgeführter Abgasstrom in einem ersten Betriebszustand des Dieselmotors durch den Abgasrückführungskühler geleitet und abgekühlt wird und in einem zweiten Betriebszustand durch den Bypass geleitet und ungekühlt zurückgeführt wird. Durch eine wahlweise gekühlte oder ungekühlte Abgasrückführung über die Hochdruckabgasrückführung ist eine besonders effiziente Minderung der Rohemissionen des Dieselmotors möglich.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit denselben Bezugsziffern gekennzeichnet. Es zeigen:
- Figur 1: ein nicht zur Erfindung gehörendes Ausführungsbeispiel eines Dieselmotors mit einem Abgasnachbehandlungssystem;
- Figur 2: ein bevorzugtes Ausführungsbeispiel für einen erfindungsgemäßen Dieselmotor mit einem Abgasnachbehandlungssystem; und
- Figur 3: ein Ablaufdiagramm zur Durchführung eines erfindungsgemäßen Verfahrens zur Abgasnachbehandlung eines Dieselmotors.

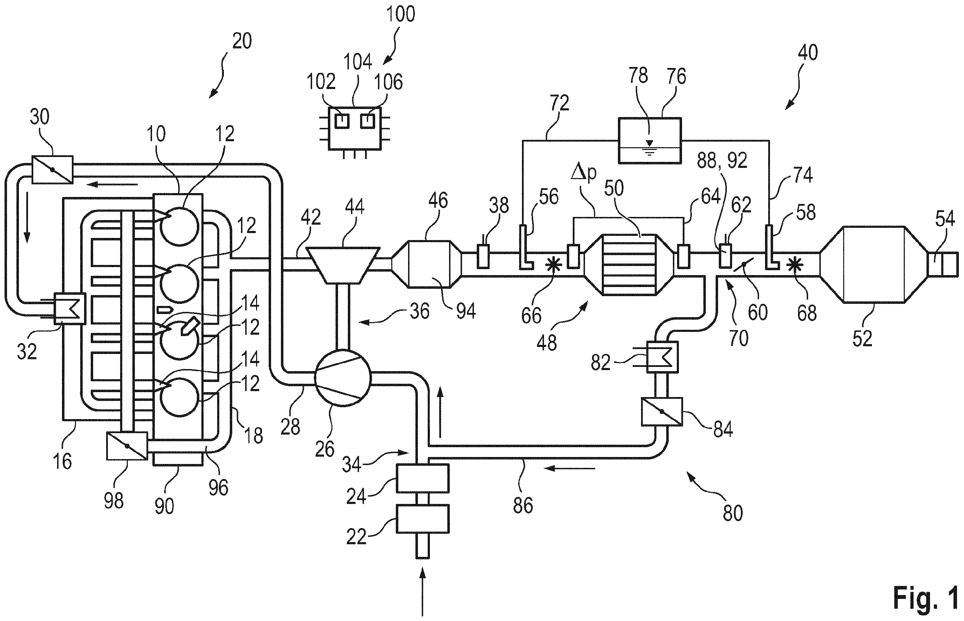

Figur 1 zeigt die schematische Darstellung eines nicht zur Erfindung gehörenden Dieselmotors 10 mit einem Ansaugtrakt 20 und einer Abgasanlage 40. Der Dieselmotor 10 ist als ein direkteinspritzender Dieselmotor ausgeführt und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Dieselmotor 10 ist mit seinem Einlass 16 mit einem Ansaugtrakt 20 und mit seinem Auslass 18 mit einer Abgasanlage 40 verbunden. Der Dieselmotor 10 umfasst ferner eine Hochdruck-Abgasrückführung 90 mit einer Abgasrückführungsleitung 96, in welcher ein Hochdruck-Abgasrückführungsventil 98 angeordnet ist, über welches ein Abgas des Dieselmotors 10 von dem Auslass 18 zum Einlass 16 zurückgeführt werden kann. An den Brennräumen 12 sind Einlassventile und Auslassventile angeordnet, mit welchen eine fluidische Verbindung vom Ansaugtrakt 20 zu den Brennräumen 12 oder von den Brennräumen 12 zur Abgasanlage 40 geöffnet oder verschlossen werden kann.

Der Ansaugtrakt 20 umfasst einen Ansaugkanal 28, in welchem in Strömungsrichtung von Frischluft durch den Ansaugkanal 28 ein Luftfilter 22, stromabwärts des Luftfilters 22 ein Luftmassenmesser 24, insbesondere ein Heißfilmluftmassenmesser, stromabwärts des Luftmassenmessers 24 ein Verdichter 26 eines Abgasturboladers 36, stromabwärts des Verdichters 26 eine Drosselklappe 30 und weiter stromabwärts ein Ladeluftkühler 32 angeordnet sind. Dabei kann der Luftmassenmesser 24 auch in einem Filtergehäuse des Luftfilters 22 angeordnet sein, sodass der Luftfilter 22 und der Luftmassenmesser 24 eine Baugruppe ausbildet. Stromabwärts des Luftfilters 22 und stromaufwärts des Verdichters 26 ist eine Einmündung 34 vorgesehen, an welcher eine Abgasrückführungsleitung 86 einer Niederdruck-Abgasrückführung 80 in den Ansaugkanal 28 mündet.

Die Abgasanlage 40 umfasst einen Abgaskanal 42, in welchem in Strömungsrichtung eines Abgases des Dieselmotors 10 durch den ersten Abgaskanal 42 eine Turbine 44 des Abgasturboladers 36 angeordnet ist, welche den Verdichter 26 im Ansaugtrakt 20 über eine Welle antreibt. Der Abgasturbolader 36 ist vorzugsweise als Abgasturbolader 36 mit variabler Turbinengeometrie ausgeführt. Dazu sind einem Turbinenrad der Turbine 44 verstellbare Leitschaufeln vorgeschaltet, über welche die Anströmung des Abgases auf die Schaufeln der Turbine 44 variiert werden kann. Stromabwärts der Turbine 44 sind mehrere Abgasnachbehandlungskomponenten 46, 48, 50, 52, 54, 94 vorgesehen. Dabei ist unmittelbar stromabwärts der Turbine 44 als erste Komponente der Abgasnachbehandlung ein Oxidationskatalysator 46 oder ein NO_{X}-Speicherkatalysator 94 angeordnet. Stromabwärts des Oxidationskatalysators 46 oder des NO_{X}-Speicherkatalysators 94 ist ein motornaher erster SCR-Katalysator 48, vorzugsweise ein Partikelfilter 50 mit einer Beschichtung zur selektiven katalytischen Reduktion von Stickoxiden (SCR-Beschichtung) angeordnet. Stromabwärts des motornahen ersten SCR-Katalysators 48 ist vorzugsweise in Unterbodenlage eines Kraftfahrzeuges ein zweiter SCR-Katalysator 52 im Abgaskanal 42 angeordnet. Der zweite SCR-Katalysator 52 weist einen Ammoniak-Sperrkatalysator 54 auf. Stromabwärts des Oxidationskatalysators 46 oder des NOx-Speicherkatalysators 94 und stromaufwärts des ersten SCR-Katalysators 48 ist ein erstes Dosierelement 56 zur Eindosierung eines Reduktionsmittels 78 in den Abgaskanal 42 vorgesehen. Stromabwärts des ersten SCR-Katalysators 48, insbesondere stromabwärts des Partikelfilters 50 mit der SCR-Beschichtung, zweigt an einer Verzweigung 70 eine Abgasrückführungsleitung 86 einer Niederdruck-Abgasrückführung 80 aus dem Abgaskanal 42 ab. Stromabwärts der Verzweigung 70 und stromaufwärts des zweiten SCR-Katalysators 52 ist ein zweites Dosierelement 58 angeordnet, um das Reduktionsmittel 78 in den Abgaskanal 42 einzudosieren. Das erste Dosierelement 56 und das zweite Dosierelement 58 sind jeweils über eine Reduktionsmittelleitung 72, 74 mit einem gemeinsamen Reduktionsmittelbehälter 76 verbunden, in welchem das Reduktionsmittel 78 bevorratet ist. Ferner umfasst die Abgasanlage 40 eine Abgasklappe 60, mit welcher die Abgasrückführung über die Niederdruck-Abgasrückführung 80 gesteuert werden kann.

Die Niederdruck-Abgasrückführung 80 umfasst neben der Abgasrückführungsleitung 86 einen Abgasrückführungskühler 82 und ein Abgasrückführungsventil 84, über welches die Abgasrückführung durch die Abgasrückführungsleitung 86 steuerbar ist. In dem Abgaskanal 42 kann eine Abgastemperatur T_{EG} durch einen Temperatursensor 38 erfasst werden oder durch das Motorsteuergerät 100 berechnet werden, um die Niederdruck-Abgasrückführung 80 zu aktivieren, sobald die Abgastemperatur T_{EG} einen definierten Schwellenwert überschritten hat. An der Abgasrückführungsleitung 86 der Niederdruck-Abgasrückführung 80 kann ein weiterer Temperatursensor vorgesehen werden, um die Temperatur des zurückgeführten Abgases stromabwärts des Abgasrückführungskühlers 82 zu ermitteln. Dadurch kann vermieden werden, dass das zurückgeführte Abgas so stark gekühlt wird, dass der Taupunkt unterschritten wird und es zu einem Auskondensieren von Wassertropfen in der Abgasrückführungsleitung 86 kommt. Somit kann verhindert werden, dass Wasserdampf oder im Abgas enthaltene Gaskomponenten auskondensieren und in der Niederdruck-Abgasrückführung 80 oder im Ansaugtrakt 20 zu Beschädigungen oder Ablagerungen führen. Stromabwärts der Verzweigung 70 und stromaufwärts des Abgasrückführungskühlers 82 kann ferner ein Filter vorgesehen werden, um den Eintrag von Partikeln in die Niederdruck-Abgasrückführung 80 zu minimieren. Der Abgasrückführungskanal 86 mündet an einer Einmündung 34 in den Ansaugkanal 28 des Ansaugtraktes 20.

In der Abgasanlage 40 ist stromabwärts der Verzweigung 70 für die Niederdruck-Abgasrückführung und stromaufwärts des zweiten Dosierelements 58 ein Abgassensor 62 zur Erfassung der Ammoniak-Konzentration im Abgaskanal 42 angeordnet. Der Abgassensor 62 ist vorzugsweise als NH₃-Sensor 88 oder als NH₃-NO_{X}-Kombisensor 92 ausgeführt. Ferner weist der Partikelfilter 50 einen Differenzdrucksensor 64 auf, mit welchem eine Druckdifferenz Δp über den Partikelfilter 50 ermittelt wird. Auf diese Weise kann der Beladungszustand des Partikelfilters 50 ermittelt und bei Überschreiten eines definierten Beladungsniveaus eine Regeneration des Partikelfilters 50 eingeleitet werden. Ferner ist in der Abgasanlage 40 ein Temperatursensor 38 vorgesehen, um die Abgastemperatur zu ermitteln.

Stromabwärts des ersten Dosierelements 56 und stromaufwärts des ersten SCR-Katalysators 48 kann ein erster Abgasmischer 66 vorgesehen sein, um eine Durchmischung von Abgasstrom des Dieselmotors 10 und Reduktionsmittel 78 vor Eintritt in den ersten SCR-Katalysator 48 zu verbessern und die Länge der Mischstrecke zu verkürzen. Stromabwärts des zweiten Dosierelements 58 und stromaufwärts des zweiten SCR-Katalysators 52 kann ein zweiter Abgasmischer 68 angeordnet sein, um die Vermischung von Abgasstrom und Reduktionsmittel 78 zu verbessern und das Verdampfen des Reduktionsmittels 78 im Abgaskanal 42 zu unterstützen.

Der Dieselmotor 10 ist mit einem Motorsteuergerät 100 verbunden, welches über nicht dargestellte Signalleitungen mit dem Abgassensor 62, 88, 92, dem Differenzdrucksensor 64, dem Temperatursensor 38 sowie mit den Kraftstoffinjektoren 14 des Dieselmotors 10 und den Dosierelementen 56, 58 verbunden ist. Das Motorsteuergerät 100 weist eine Recheneinheit 102 und eine Speichereinheit 104 auf, in welcher ein maschinenlesbarer Programmcode 106 zur Durchführung eines erfindungsgemäßen Verfahrens zur Abgasnachbehandlung des Dieselmotors 10 gespeichert ist.

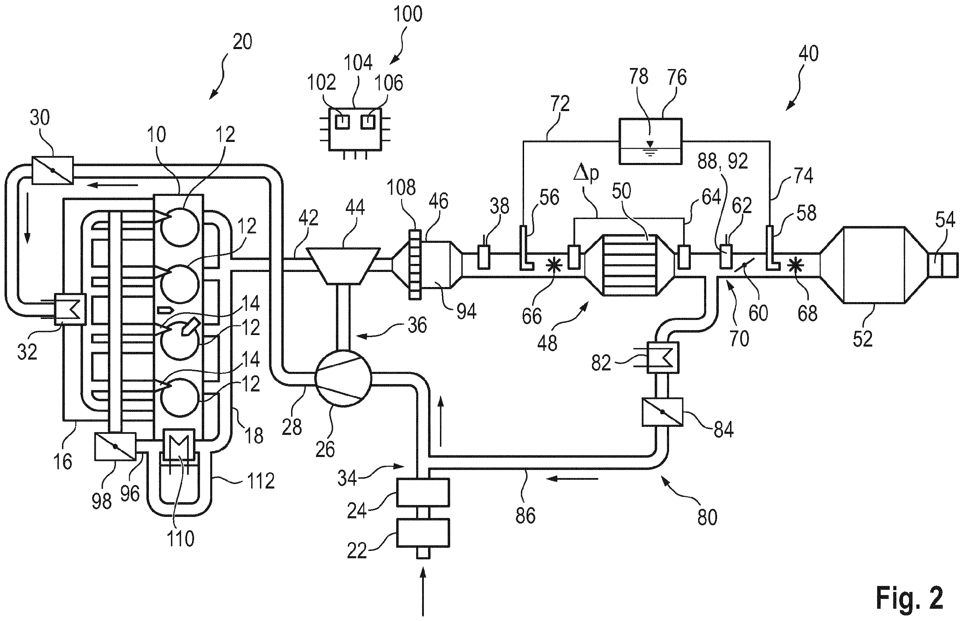

In Figur 2 ist ein Ausführungsbeispiel eines erfindungsgemäßen Dieselmotors 10 dargestellt. Bei im Wesentlichen gleichen Aufbau wie zu Figur 1 ausgeführt, wird im Folgenden auf die Unterschiede zu der vorhergehenden Ausführungsform eingegangen. Der in Figur 2 dargestellte Dieselmotor 10 weist in der Abgasanlage 40 zusätzlich ein außermotorisches Heizmittel 108, insbesondere ein elektrisches Heizelement, auf, mit welchem ein Abgasstrom des Dieselmotors 10 unabhängig vom Betriebszustand des Dieselmotors 10 aufgeheizt werden kann. Das außermotorische Heizmittel 108 ist vorzugsweise stromaufwärts des Oxidationskatalysators 46 oder des NOx-Speicherkatalysators 94 angeordnet oder in den Oxidationskatalysator 46 oder den NOx-Speicherkatalysator 94 integriert. Alternativ kann das außermotorische Heizmittel 108 auch als ein Abgasbrenner ausgebildet sein oder wie in Figur 1 dargestellt entfallen.

Ferner ist in der Hochdruckabgasrückführung 90 ein schaltbarer Abgasrückführungskühler 110 angeordnet, welcher mittels eines Bypasses 112 überbrückt werden kann. Somit kann der durch die Hochdruckabgasrückführung 90 zurückgeführte Abgasstrom wahlweise gekühlt oder ungekühlt zurückgeführt werden. Alternativ kann in der Hochdruckabgasrückführung 90 auch ein Abgasrückführungskühler 110 angeordnet sein, welcher nicht überbrückt werden kann und bei Öffnung des Hochdruckabgasrückführungsventils 98 stets vom zurückgeführten Abgasstrom durchströmt wird. Alternativ kann ein solcher Abgasrückführungskühler 110 auch, wie in Figur 1 dargestellt, entfallen.

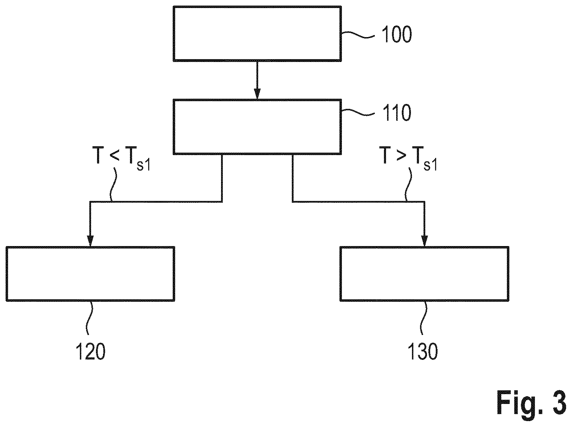

In Figur 3 ist ein Ablaufdiagramm zur Durchführung eines erfindungsgemäßen Verfahrens zur Abgasnachbehandlung eines Dieselmotors 10 dargestellt. In einem ersten Verfahrensschritt <100> wir ein Lastzustand des Dieselmotors 10 und/oder eine Abgastemperatur T_{EG} ermittelt, wobei niedrige Lastzustände mit niedrigen Abgastemperaturen korrelieren. In einem Verfahrensschritt <110> wird die ermittelte Abgastemperatur T_{EG} mit einer ersten Schwellentemperatur T_{S1} und/oder die Motorlast P_{E} mit einer Schwellenlast Ps verglichen. Bei einer Abgastemperatur T_{EG} unterhalb der ersten Schwellentemperatur T_{S1} oder einer Motorlast P_{E} unterhalb der Schwellenlast P_{S} in einem Verfahrensschritt <120> erfolgt eine Eindosierung des Reduktionsmittels 78 ausschließlich durch das erste Dosierelement 56 und eine Abgasrückführung ausschließlich durch die Hochdruckabgasrückführung 90. Bei einer Abgastemperatur T_{EG} oberhalb der ersten Schwellentemperatur T_{S1} oder einer Motorlast P_{E} oberhalb der Schwellenlast P_{S} erfolgt in einem Verfahrensschritt <130> eine Eindosierung des Reduktionsmittels 78 ausschließlich durch das zweite Dosierelement 58 und eine Abgasrückführung sowohl über die Hochdruckabgasrückführung 90 als auch über die Niederdruck-Abgasrückführung 80. Dabei wird vorzugsweise ein größerer Abgasteilstrom über die Niederdruck-Abgasrückführung 80 als über die Hochdruck-Abgasrückführung 90 zurückgeführt.

### Bezugszeichenliste

- 10: Verbrennungsmotor / Dieselmotor
- 12: Brennraum
- 14: Kraftstoffinjektor
- 16: Einlass
- 18: Auslass

- 20: Ansaugtrakt
- 22: Luftfilter
- 24: Luftmassenmesser
- 26: Verdichter
- 28: Ansaugkanal

- 30: Drosselklappe
- 32: Ladeluftkühler
- 34: Einmündung
- 36: Abgasturbolader
- 38: Temperatursensor

- 40: Abgasanlage
- 42: Abgaskanal
- 44: Turbine
- 46: Oxidationskatalysator
- 48: erster SCR-Katalysator

- 50: Partikelfilter mit SCR-Beschichtung
- 52: zweiter SCR-Katalysator
- 54: Ammoniak-Sperrkatalysator
- 56: erstes Dosierelement
- 58: zweites Dosierelement
- 60: Abgasklappe
- 62: Abgassensor
- 64: Differenzdrucksensor
- 66: erster Abgasmischer
- 68: zweiter Abgasmischer

- 70: Verzweigung
- 72: erste Reduktionsmittelleitung
- 74: zweite Reduktionsmittelleitung
- 76: Reduktionsmittelbehälter
- 78: Reduktionsmittel

- 80: Niederdruck-Abgasrückführung
- 82: Abgasrückführungskühler
- 84: Abgasrückführungsventil
- 86: Abgasrückführungsleitung
- 88: NH₃-Sensor

- 90: Hochdruck-Abgasrückführung
- 92: NH₃-NO_{X}-Kombisensor
- 94: NOx-Speicherkatalysator
- 96: Abgasrückführungsleitung
- 98: Hochdruck-Abgasrückführungsventil

- 100: Motorsteuergerät
- 102: Recheneinheit
- 104: Speichereinheit
- 106: Programmcode
- 108: außermotorisches Heizmittel / elektrisches Heizelement

- 110: Abgasrückführungskühler
- 112: Bypass

## Patentansprüche

1. Verfahren zur Abgasnachbehandlung eines Dieselmotors (10), der mit seinem Auslass (18) mit einer Abgasanlage (40) verbunden ist, wobei in der Abgasanlage (40) stromabwärts einer Turbine (44) eines Abgasturboladers (36) ein motornaher erster SCR-Katalysator (48, 50) und stromabwärts des motornahen ersten SCR-Katalysators (48, 50) ein zweiter SCR-Katalysator (52) angeordnet sind, sowie mit einem ersten Dosierelement (56), mit welchem ein Reduktionsmittel (78) stromaufwärts des ersten SCR-Katalysators (48, 50) in den Abgaskanal (42) eindosierbar ist und mit einem zweiten Dosierelement (58), mit welchem ein Reduktionsmittel (78) stromabwärts des ersten SCR-Katalysators (48, 50) in den Abgaskanal (42) eindosierbar ist, wobei der Dieselmotor (10) eine Hochdruck-Abgasrückführung (90), welche die Abgasanlage (40) stromaufwärts der Turbine (44) des Abgasturboladers (36) mit einem Ansaugtrakt (20) stromabwärts eines Verdichters (26) des Abgasturboladers (36) verbindet, umfasst und eine Niederdruck-Abgasrückführung (80) aufweist, welche stromabwärts des ersten SCR-Katalysators (48, 50) und stromaufwärts des zweiten Dosierelements (58) aus einem Abgaskanal (42) der Abgasanlage (40) abzweigt, sowie mit Mitteln (38, 62, 88, 92, 94, 100) zur Bestimmung einer Motorlast des Dieselmotors (10), eines Abgasmassenstroms, einer Abgastemperatur (T_{EG}) und einer Schadstoffkonzentration in der Abgasanlage (40), wobei das Verfahren folgende Schritte umfasst:
- Ermitteln eines Lastzustands des Dieselmotors (10) und/oder einer Abgastemperatur (T_{EG}) des Dieselmotors (10),
- Vergleichen der Abgastemperatur (T_{EG}) mit einer ersten Schwellentemperatur (T_{S1}) und/oder der Motorlast (P_{E}) mit einer Schwellenlast (P_{S}), wobei
- bei einer Abgastemperatur (T_{EG}) unterhalb der ersten Schwellentemperatur (T_{S1}) oder einer Motorlast (P_{E}) unterhalb der Schwellenlast (P_{S}) eine Eindosierung des Reduktionsmittels (78) ausschließlich durch das erste Dosierelement (56) erfolgt und eine Abgasrückführung über die Hochdruck-Abgasrückführung (90) erfolgt,
wobei bei niedrigen Motorlasten eine ungekühlte Abgasrückführung des über die Hochdruck-Abgasrückführung (90) zurückgeführten Abgasstroms und bei hohen Motorlasten eine gekühlte Abgasrückführung des über die Hochdruck-Abgasrückführung (90) zurückgeführten Abgasstroms erfolgt,
wobei ein Abgasrückführungsventil (84) in der Niederdruck-Abgasrückführung (80) geschlossen wird, wenn eine Eindosierung von Reduktionsmittel (78) durch das erste Dosierelement (56) erfolgt und stromabwärts des ersten SCR-Katalysators (48, 50) ein Anstieg einer Ammoniakkonzentration im Abgasstrom des Dieselmotors (10) detektiert wird, und wobei
- bei einer Abgastemperatur (T_{EG}) oberhalb der ersten Schwellentemperatur (T_{S1}) oder einer Motorlast (P_{E}) oberhalb der Schwellenlast (Ps) eine Eindosierung des Reduktionsmittels (78) ausschließlich durch das zweite Dosierelement (58) erfolgt und eine Abgasrückführung sowohl über die Hochdruck-Abgasrückführung (90) als auch über die Niederdruck-Abgasrückführung (80) erfolgt.

2. Verfahren nach Anspruch 1, **dadurch gekennzeichnet, dass** bei einer Abgastemperatur (T_{EG}) oberhalb der ersten Schwellentemperatur (T_{S1}) oder einer Motorlast (P_{E}) oberhalb der Schwellenlast (P_{S}) mehr als 50% der zurückgeführten Gesamtabgasstroms über die Niederdruckabgasrückführung zurückgeführt wird.

3. Verfahren nach Anspruch 1 oder 2, **dadurch gekennzeichnet, dass** der über die Niederdruck-Abgasrückführung (80) zurückgeführte Abgasstrom durch einen Abgasrückführungskühler (82) abgekühlt wird.

4. Verfahren nach einem der Ansprüche 1 bis 3, **dadurch gekennzeichnet, dass** ein Abgasstrom des Dieselmotors (10) durch ein außermotorisches Heizmittel (108) vor Eintritt in den ersten SCR-Katalysator beheizt wird.

5. Verfahren nach Anspruch 4, **dadurch gekennzeichnet, dass** der Abgasstrom des Dieselmotors (10) durch das außermotorische Heizmittel (108) beheizt wird, wenn die Abgastemperatur (T_{EG}) unterhalb einer zweiten Schwellentemperatur (T_{S2}) liegt oder die Temperatur einer Abgasnachbehandlungskomponente (46, 48, 50, 52, 94) unterhalb einer Light-Off-Temperatur der jeweiligen Abgasnachbehandlungskomponente (46, 48, 50, 52, 94) liegt.

6. Dieselmotor (10) mit einem Ansaugtrakt (20) und einer Abgasanlage (40), wobei der Dieselmotor (10) mit seinem Auslass (18) mit der Abgasanlage (40) verbunden ist, wobei in der Abgasanlage (40) stromabwärts einer Turbine (44) eines Abgasturboladers (36) ein motornaher erster SCR-Katalysator (48, 50) und stromabwärts des motornahen ersten SCR-Katalysators (48, 50) ein zweiter SCR-Katalysator (52) angeordnet sind, sowie mit einem ersten Dosierelement (56), mit welchem ein Reduktionsmittel (78) stromaufwärts des ersten SCR-Katalysators (48, 50) in den Abgaskanal (42) eindosierbar ist und mit einem zweiten Dosierelement (58), mit welchem ein Reduktionsmittel (78) stromabwärts des ersten SCR-Katalysators (48, 50) eindosierbar ist, wobei der Dieselmotor (10) eine Hochdruck-Abgasrückführung (90), welche die Abgasanlage (40) stromaufwärts der Turbine (44) des Abgasturboladers (36) mit dem Ansaugtrakt (20) stromabwärts eines Verdichters (26) des Abgasturboladers (36) verbindet und eine Niederdruck-Abgasrückführung (80) aufweist, welche stromabwärts des ersten SCR-Katalysators (48, 50) und stromaufwärts des zweiten Dosierelements (58) aus einem Abgaskanal (42) der Abgasanlage (40) abzweigt, sowie mit Mitteln (38, 62, 88, 92, 94, 100) zur Bestimmung einer Motorlast des Dieselmotors (10), eines Abgasmassenstroms, einer Abgastemperatur (T_{EG}) und einer Schadstoffkonzentration in der Abgasanlage (40), wobei die Hochdruck-Abgasrückführung (90) einen schaltbaren Abgasrückführungskühler (110) mit einem Bypass (112) aufweist, wobei ein über die Hochdruck-Abgasrückführung des Dieselmotors (10) zurückgeführter Abgasstrom in einem ersten Betriebszustand durch den Abgasrückführungskühler (110) geleitet und abgekühlt wird und in einem zweiten Betriebszustand durch den Bypass (112) geleitet und ungekühlt zurückgeführt wird, sowie mit einem Motorsteuergerät (100) mit einer Recheneinheit (102) und einer Speichereinheit (104), wobei das Motorsteuergerät (100) ein Verfahren nach einem der Ansprüche 1 bis 7 ausführt, wenn ein in der Speichereinheit (104) abgelegter Programmcode (106) durch die Recheneinheit (102) des Motorsteuergeräts (100) ausgeführt wird.

7. Dieselmotor (10) nach Anspruch 6, **dadurch gekennzeichnet, dass** in der Abgasanlage (40) ein Abgassensor (62) angeordnet ist, wobei der Abgassensor (62) als NH₃-Sensor (88) oder als NH₃-NO_{X}-Kombisensor (92) ausgeführt ist.

## Claims

1. Method for the exhaust gas aftertreatment of a diesel engine (10), which is connected by means of its outlet (18) to an exhaust gas system (40), wherein a first SCR catalyst (48, 50) close to the engine is arranged in the exhaust gas system (40) downstream of a turbine (44) of an exhaust gas turbocharger (36) and a second SCR catalyst (52) is arranged downstream of the first SCR catalyst (48, 50) close to the engine, and comprising a first metering element (56), by means of which a reducing agent (78) can be metered upstream of the first SCR catalyst (48, 50) into the exhaust duct (42), and comprising a second metering element (58), by means of which a reducing agent (78) can be metered downstream of the first SCR catalyst (48, 50) into the exhaust duct (42), wherein the diesel engine (10) comprises a high-pressure exhaust gas recirculation system (90) which connects the exhaust gas system (40) upstream of the turbine (44) of the exhaust gas turbocharger (36) to an intake tract (20) downstream of a compressor (26) of the exhaust gas turbocharger (36) and has a low-pressure exhaust gas recirculation system (80) which branches off from an exhaust duct (42) of the exhaust gas system (40), downstream of the first SCR catalyst (48, 50) and upstream of the second metering element (58), also comprising means (38, 62, 88, 92, 94, 100) for determining an engine load of the diesel engine (10), of an exhaust gas mass flow, of an exhaust gas temperature (T_{EG}) and a pollutant concentration in the exhaust gas system (40), wherein the method comprises the following steps:
- identifying a load state of the diesel engine (10) and/or an exhaust gas temperature (T_{EG}) of the diesel engine (10),
- comparing the exhaust gas temperature (T_{EG}) with a first threshold temperature (T_{S1}) and/or the engine load (P_{E}) with a threshold load (Ps), wherein
- at an exhaust gas temperature (T_{EG}) below the first threshold temperature (T_{S1}) or an engine load (P_{E}) below the threshold load (Ps) the reducing agent (78) is metered exclusively by the first metering element (56) and exhaust gas recirculation takes place via the high-pressure exhaust gas recirculation system (90),
wherein, at low engine loads, an uncooled exhaust gas recirculation of the exhaust gas flow returned via the high-pressure exhaust gas recirculation system (90) takes place and at high engine loads a cooled exhaust gas recirculation of the exhaust gas flow returned via the high-pressure exhaust gas recirculation system (90) takes place,
wherein an exhaust gas recirculation valve (84) in the low-pressure exhaust gas recirculation system (80) is closed when the reducing agent (78) is metered by the first metering element (56) and an increase of an ammonia concentration in the exhaust gas flow of the diesel engine (10) is detected downstream of the first SCR catalyst (48, 50), and wherein
- at an exhaust gas temperature, (T_{EG}) above the first threshold temperature (T_{S1}) or an engine load (P_{E}) above the threshold load (Ps), the reducing agent (78) is metered exclusively by the second metering element (58), and exhaust gas recirculation takes place both via the high-pressure exhaust gas recirculation system (90) and via the low-pressure exhaust gas recirculation system (80).

2. Method according to claim 1, **characterized in that** at an exhaust gas temperature (T_{EG}) above the first threshold temperature (T_{S1}) or an engine load (P_{E}) above the threshold load (Ps), more than 50% of the total returned exhaust gas flow is returned via the low-pressure exhaust gas recirculation system.

3. Method according to either claim 1 or claim 2, **characterized in that** the exhaust gas flow returned via the low-pressure exhaust gas recirculation system (80) is cooled by an exhaust gas recirculation cooler (82).

4. Method according to any of claims 1 to 3, **characterized in that** an exhaust gas flow of the diesel engine (10) is heated by a heating means (108) outside the engine before it enters the first SCR catalyst.

5. Method according to claim 4, **characterized in that** the exhaust gas flow of the diesel engine (10) is heated by the heating means (108) outside the engine if the exhaust gas temperature (T_{EG}) is below a second threshold temperature (T_{S2}) or the temperature of an exhaust gas aftertreatment component (46, 48, 50, 52, 94) is below a light-off temperature of the relevant exhaust gas aftertreatment component (46, 48, 50, 52, 94).

6. Diesel engine (10) comprising an intake tract (20) and an exhaust gas system (40), wherein the diesel engine (10) is connected by means of its outlet (18) to the exhaust gas system (40), wherein a first SCR catalyst (48, 50) close to the engine is arranged in the exhaust gas system (40) downstream of a turbine (44) of an exhaust gas turbocharger (36) and a second SCR catalyst (52) is arranged downstream of the first SCR catalyst (48, 50) close to the engine, and comprising a first metering element (56), by means of which a reducing agent (78) can be metered upstream of the first SCR catalyst (48, 50) into the exhaust duct (42), and comprising a second metering element (58), by means of which a reducing agent (78) can be metered downstream of the first SCR catalyst (48, 50), wherein the diesel engine (10) comprises a high-pressure exhaust gas recirculation system (90) which connects the exhaust gas system (40) upstream of the turbine (44) of the exhaust gas turbocharger (36) to the intake tract (20) downstream of a compressor (26) of the exhaust gas turbocharger (36) and has a low-pressure exhaust gas recirculation system (80) which branches off from an exhaust duct (42) of the exhaust gas system (40), downstream of the first SCR catalyst (48, 50) and upstream of the second metering element (58), also comprising means (38, 62, 88, 92, 94, 100) for determining an engine load of the diesel engine (10) of an exhaust gas mass flow, of an exhaust gas temperature (T_{EG}) and of a pollutant concentration in the exhaust gas system (40), wherein the high-pressure exhaust gas recirculation system (90) has a switchable exhaust gas recirculation cooler (110) having a bypass (112), wherein, in a first operating state, a gas flow which is returned via the high-pressure exhaust gas recirculation system of the diesel motor (10) is guided through the exhaust gas recirculation cooler (110) and cooled and, in a second operating state, is guided through the bypass (112) and returned uncooled, and comprising a motor control unit (100) having a computing unit (102) and a storage unit (104), wherein the motor control unit (100) carries out a method according to any of claims 1 to 7, if a program code (106) stored in the storage unit (104) is executed by the computing unit (102) of the motor control unit (100).

7. Diesel engine (10) according to claim 6, **characterized in that** an exhaust gas sensor (62) is arranged in the exhaust gas system (40), wherein the exhaust gas sensor (62) is designed as an NHssensor (88) or as an NH₃-NO_{X} combination sensor (92).

## Revendications

1. Procédé de post-traitement des gaz d'échappement d'un moteur diesel (10), qui est relié avec sa sortie (18) à une installation de gaz d'échappement (40), dans lequel, dans l'installation de gaz d'échappement (40), en aval d'une turbine (44) d'un turbocompresseur de gaz d'échappement (36), sont disposés un premier catalyseur SCR (48, 50) proche du moteur et, en aval du premier catalyseur SCR (48, 50) proche du moteur, un second catalyseur SCR (52), ainsi qu'à un premier élément de dosage (56), avec lequel un agent de réduction (78) peut être dosé en amont du premier catalyseur SCR (48, 50) dans le canal de gaz d'échappement (42) et à un second élément de dosage (58), avec lequel un agent de réduction (78) peut être dosé en aval du premier catalyseur SCR (48, 50) dans le canal de gaz d'échappement (42), dans lequel le moteur diesel (10) comprend un recyclage de gaz d'échappement haute pression (90), qui relie l'installation de gaz d'échappement (40) en amont de la turbine (44) du turbocompresseur de gaz d'échappement (36) avec un conduit d'admission (20) en aval d'un compresseur (26) du turbocompresseur de gaz d'échappement (36) et présente un recyclage de gaz d'échappement basse pression (80), qui se ramifie en aval du premier catalyseur SCR (48, 50) et en amont du second élément de dosage (58) à partir d'un canal de gaz d'échappement (42) de l'installation de gaz d'échappement (40), ainsi qu'à des moyens (38, 62, 88, 92, 94, 100) pour la détermination d'une charge moteur du moteur diesel (10), d'un débit massique des gaz d'échappement, d'une température de gaz d'échappement (T_{EG}) et d'une concentration en polluant dans l'installation de gaz d'échappement (40), dans lequel le procédé comprend les étapes suivantes :
- identification d'un état de charge du moteur diesel (10) et/ou d'une température de gaz d'échappement (T_{EG}) du moteur diesel (10),
- comparaison de la température de gaz d'échappement (T_{EG}) avec une première température seuil (T_{S1}) et/ou de la charge moteur (P_{E}) avec une charge seuil (Ps), dans lequel
- lorsqu'une température de gaz d'échappement (T_{EG}) est inférieure à la première température seuil (T_{S1}) ou qu'une charge moteur (P_{E}) est inférieure à la charge seuil (Ps) un dosage de l'agent de réduction (78) est effectué uniquement à travers le premier élément de dosage (56) et un recyclage de gaz d'échappement est effectué par le recyclage de gaz d'échappement haute pression (90), dans lequel en cas de faibles charges moteur un recyclage des gaz d'échappement non refroidi du flux de gaz d'échappement recyclé par l'intermédiaire du recyclage de gaz d'échappement haute pression (90) est effectué et, en cas de charges moteurs élevées, un recyclage des gaz d'échappement refroidi du flux de gaz d'échappement recyclé par l'intermédiaire du recyclage de gaz d'échappement haute pression (90) est effectué, dans lequel une soupape de recyclage de gaz d'échappement (84) dans le recyclage de gaz d'échappement basse pression (80) est fermée lorsqu'un dosage d'agent de réduction (78) est effectué par le premier élément de dosage (56) et qu'une augmentation d'une concentration en ammoniac dans le flux de gaz d'échappement du moteur diesel (10) est détectée en aval du premier catalyseur SCR (48, 50) et dans lequel
- lorsqu'une température de gaz d'échappement (T_{EG}) est supérieure à la première température seuil (T_{S1}) ou qu'une charge moteur (P_{E}) est supérieure à la charge seuil (Ps) un dosage de l'agent de réduction (78) est effectué uniquement à travers le second élément de dosage (58) et un recyclage de gaz d'échappement est effectué aussi bien par l'intermédiaire du recyclage de gaz d'échappement haute pression (90) que par l'intermédiaire du recyclage de gaz d'échappement basse pression (80).

2. Procédé selon la revendication 1, **caractérisé en ce que** lorsqu'une température de gaz d'échappement (T_{EG}) est supérieure à la première température seuil (T_{S1}) ou qu'une charge moteur (P_{E}) est supérieure à la charge seuil (Ps) plus de 50 % du flux de gaz d'échappement total recyclé sont recyclés par l'intermédiaire du recyclage de gaz d'échappement basse pression.

3. Procédé selon la revendication 1 ou 2, **caractérisé en ce que** le flux de gaz d'échappement recyclé par l'intermédiaire du recyclage de gaz d'échappement basse pression (80) est refroidi par un refroidisseur de recyclage de gaz d'échappement (82).

4. Procédé selon l'une des revendications 1 à 3, **caractérisé en ce qu'**un flux de gaz d'échappement du moteur diesel (10) est chauffé par un moyen de chauffage hors moteur (108) avant l'entrée dans le premier catalyseur SCR.

5. Procédé selon la revendication 4, **caractérisé en ce que** le flux de gaz d'échappement du moteur diesel (10) est chauffé par le moyen de chauffage hors moteur (108), lorsque la température de gaz d'échappement (T_{EG}) est inférieure à une seconde température seuil (T_{S2}) ou lorsque la température d'un composant de post-traitement de gaz d'échappement (46, 48, 50, 52, 94) est inférieure à une température d'amorçage du composant de post-traitement de gaz d'échappement (46, 48, 50, 52, 94) respectif.

6. Moteur diesel (10) comportant un conduit d'admission (20) et une installation de gaz d'échappement (40), dans lequel le moteur diesel (10) est relié avec sa sortie (18) avec l'installation de gaz d'échappement (40), dans lequel, dans l'installation de gaz d'échappement (40) en aval d'une turbine (44) d'un turbocompresseur de gaz d'échappement (36), sont disposés un premier catalyseur SCR (48, 50) proche du moteur et, en aval du premier catalyseur SCR (48, 50) proche du moteur, un second catalyseur SCR (52), ainsi que comportant un premier élément de dosage (56), avec lequel un agent de réduction (78) peut être dosé en amont du premier catalyseur SCR (48, 50) dans le canal de gaz d'échappement (42) et comportant un second élément de dosage (58), avec lequel un agent de réduction (78) peut être dosé en aval du premier catalyseur SCR (48, 50), dans lequel le moteur diesel (10) présente un recyclage de gaz d'échappement haute pression (90), qui relie l'installation de gaz d'échappement (40) en amont de la turbine (44) du turbocompresseur de gaz d'échappement (36) avec le conduit d'admission (20) en aval d'un compresseur (26) du turbocompresseur de gaz d'échappement (36) et un recyclage de gaz d'échappement basse pression (80), qui se ramifie en aval du premier catalyseur SCR (48, 50) et en amont du second élément de dosage (58) à partir d'un canal de gaz d'échappement (42) de l'installation de gaz d'échappement (40), ainsi que comportant des moyens (38, 62, 88, 92, 94, 100) pour la détermination d'une charge moteur du moteur diesel (10), d'un débit massique de gaz d'échappement, d'une température de gaz d'échappement (T_{EG}) et d'une concentration en polluant dans l'installation de gaz d'échappement (40), dans lequel le recyclage de gaz d'échappement haute pression (90) présente un refroidisseur de recyclage de gaz d'échappement (110) commutable avec une dérivation (112), dans lequel un flux de gaz d'échappement recyclé par l'intermédiaire du recyclage de gaz d'échappement haute pression du moteur diesel (10) est dirigé et refroidi dans un premier état de fonctionnement à travers le refroidisseur de recyclage de gaz d'échappement (110) et est dirigé et recyclé non refroidi dans un second état de fonctionnement à travers la dérivation (112), ainsi que comportant un appareil de commande de moteur (100) comportant une unité de calcul (102) et une unité de mémoire (104), dans lequel l'appareil de commande de moteur (100) réalise un procédé selon l'une des revendications 1 à 7, lorsqu'un code de programme (106) stocké dans l'unité de mémoire (104) est exécuté par l'unité de calcul (102) de l'appareil de commande de moteur (100).

7. Moteur diesel (10) selon la revendication 6, **caractérisé en ce qu'**un capteur de gaz d'échappement (62) est disposé dans l'installation de gaz d'échappement (40), dans lequel le capteur de gaz d'échappement (62) est réalisé comme un capteur de NH₃ (88) ou comme un capteur combiné de NH₃-NO_{X} (92).
